(19) Europäisches Patentamt
European Patent Office
Office européen des brevets

(11) **EP 0 528 523 B1**

(12) **EUROPEAN PATENT SPECIFICATION**

(45) Date of publication and mention
of the grant of the patent:
**10.10.2001 Bulletin 2001/41**

(51) Int Cl.[7]: **C08F 297/08**, C08F 10/02,
C08F 2/34, C08F 4/655

(21) Application number: **92306000.8**

(22) Date of filing: **29.06.1992**

(54) **Improved ethylene polymer film resins**

Verbesserte Polyethylenharze für Filme

Résines de polyéthylène pour film améliorées

(84) Designated Contracting States:
**BE DE ES FR GB IT NL SE**

(30) Priority: **24.07.1991 US 734989**

(43) Date of publication of application:
**24.02.1993 Bulletin 1993/08**

(73) Proprietor: **MOBIL OIL CORPORATION**
**Fairfax, Virginia 22037-0001 (US)**

(72) Inventors:
• **Ong, Shihmay Christine**
**Warren, New Jersey 07059 (US)**
• **Schregenberger, Sandra Denise**
**Bridgewater, New Jersey 08807 (US)**

• **Shirodkar, Pradeep Pandurang**
**Somerset, New Jersey 08873 (US)**

(74) Representative: **Hucker, Charlotte Jane**
**Gill Jennings & Every**
**Broadgate House,**
**7 Eldon Street**
**London EC2M 7LH (GB)**

(56) References cited:
**EP-A- 0 192 427          EP-A- 0 231 102**
**EP-A- 0 369 436          EP-A- 0 503 791**

• **PATENT ABSTRACTS OF JAPAN vol. 9, no. 32**
**(C-265)(1755) 9 February 1985**

**Description**

This invention relates to relatively high molecular weight, high density ethylene polymers capable of being formed with good processability into films having improved mechanical properties.

EP-A-0503791 forms part of the state of the art by virtue of Article 54(3) EPC. It discloses a process for producing a bimodal polyethylene blend in tandem reactors The bimodal polymer blend comprises a high molecular weight (HMW) component having a flow index of 0.05 to 5 g/10 min., and a density of from 0.890 to 0.960 g/cm$^3$, and a low molecular weight (LMW) component having a melt index of from 10 to 4000 g/10 min., and a density from 0.890 to 0.976 g/cm$^3$, the blend having a weight fraction of the HMW component of at least 0.35, a flow index of 3 to 200 g/10 min., a melt flow ratio of from 60 to 250, a density of from 0.890 to 0.965 g/cm$^3$, and an average particle size of from 127 to 1270 μm. Example 7 of EP-A-0503791 describes a bimodal polymer blend comprising a HMW component having a flow ratio (FR) of 15 to 17 g/10 min.

EP-A-0369436 relates to the preparation of linear low density polyethylene products of various applications including films. However, with these kind of low density films, as typified by the examples in this document, the possibilities to down-gauge to thin films are limited.

The ethylene polymer of this invention consists essentially of a bimodal blend of relatively high molecular weight (HMW) and low molecular weight (LMW) ethylene polymers with the HMW component present at a weight fraction of at least 0.5 of the ethylene polymer blend and having a density of at least 0.910 g/cm$^3$, a flow index ($I_{21}$) of no higher than 0.8 g/10 min., a relatively narrow molecular weight distribution indicated by a flow ratio (FR) of up to 14, and a dynamic elasticity at 0.1 rad./sec. of no higher than 0.75 at a corresponding complex viscosity at 0.1 rad./sec. of no higher than 7x10$^5$ Pa.s (7E6, i.e., 7 x 10$^6$ poises), and the LMW component having a density of at least about 0.940 g/cm$^3$ and a melt index ($I_2$) of at least 100 g/10 min.

The product of this invention having relatively low elasticity and molecular weight distribution indicated by MFR, can be formed with good processability into thin gauge films having excellent mechanical properties, e.g., Dart Drop Impact and Elmendorf Tear resistance, despite the fact that its short chain branching, e.g., ethyl groups per 1000 C atoms, appears to be higher in the LMW component than in the HMW component. This is contrary to a prevailing belief that short chain branching should be concentrated in the HMW component for optimum mechanical properties of films.

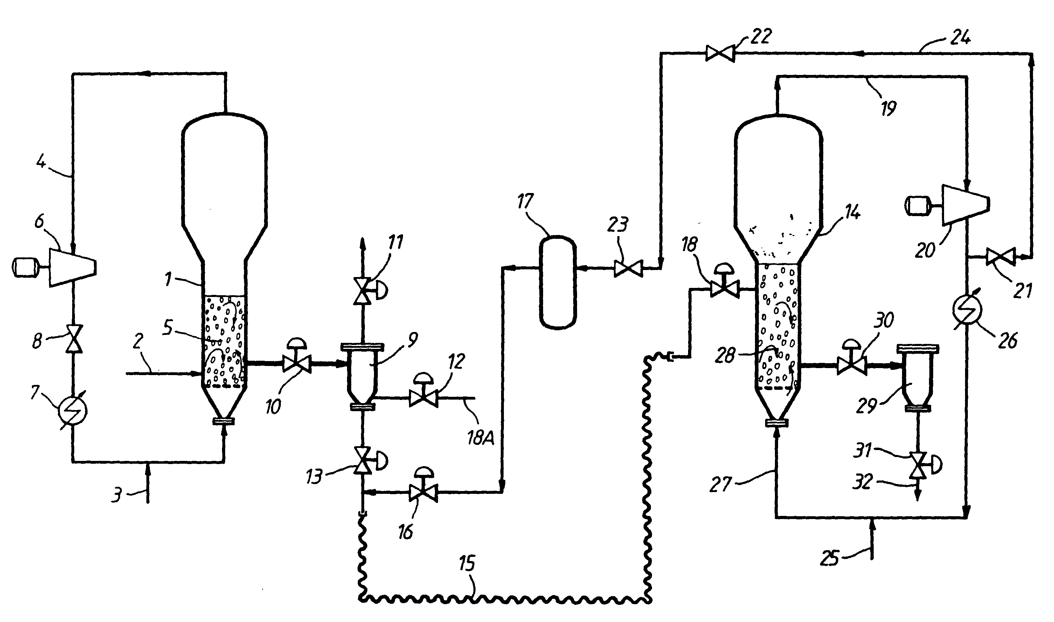

The drawing is a schematic diagram of a gas phase tandem polymerization process which can be used to make the products of this invention.

The HMW and the LMW ethylene polymers of this invention consist essentially of either 1) a homopolymer of ethylene; 2) at least one copolymer of a preponderance of ethylene with a minor amount of a 1-olefin containing 3 to 10 carbon atoms, e.g., 1-butene, 1-pentene, 1-hexene, 4-methyl-1-pentene, 1-octene, 1-decene, and mixtures thereof. In general, the polymer product will comprise an amount of polymerized comonomer which is from 0 to 30 weight percent, based on the total weight of polymer.

The density of the ethylene polymer product of this invention will generally be at least 0.925 g/cm$^3$, preferably 0.940 to 0.960 g/cm$^3$, and most preferably 0.943 to 0.952 g/cm$^3$.

The flow index or high load melt index of the ethylene polymer blend of this invention ($I_{21}$, measured at 190°C in accordance with ASTM D-1238, Condition F) is generally no higher than 15, preferably from 4 to 12, and most preferably 5 to 10 g/10 min., while the melt flow ratio (MER), defined as the ratio of flow index ($I_{21}$) to melt index ($I_2$), measured at 190°C in accordance with ASTM D-1238, Condition E, is at least 65, preferably 75 to 180, and most preferably 80 to 150.

The dynamic elasticity of the polymer blend of the invention is no higher than 0.7 at 0.1 rad./sec. at a corresponding complex viscosity of no higher than 14x10$^4$Pa.s (14E5 (14 x 10$^5$ poises)) at 0.1 rad./sec., preferably 0.45 to 0.65 at a corresponding complex viscosity of 6x10$^4$ to 14x10$^4$ Pa.s (6E5 to 14E5), and most preferably 0.45 to 0.60 at a corresponding complex viscosity of 7x10$^4$ to 14x10$^4$ Pa.s (7E5 to 14E5).

The dynamic elasticity as used herein is defined as the ratio of the storage modulus G'(w) to the loss modulus G"(w). The following definitions of these moduli were adapted from those given in J.D. Ferry, Viscoelastic Properties of Polymers, 3rd Edition (New York: John Wiley & Sons, 1980) 41-42. The definitions pertain to measurements made in small strain oscillatory measurements.

Storage Modulus, G'(w), is defined as the stress in phase with the strain in a sinusoidal shear deformation divided by the strain. It is a measure of the energy stored and recovered per cycle, when different systems are compared at the same strain amplitude. It is a function of the oscillating frequency w.

Loss Modulus, G"(w), is defined as the stress 90 degrees out of phase with the strain divided by the strain. It is a measure of the energy dissipated or lost per cycle of sinusoidal deformation, when different systems are compared at the same strain amplitude. It is also a function of the oscillating frequency w.

Complex Viscosity is derived from G'(w) and G"(w) as hereinbefore defined using the following equation:

$$\text{Complex Viscosity} = \frac{G'(w)}{w}^2 + \frac{G''(w)}{w}^2$$

As stated, the ethylene polymer of this invention consists essentially of a bimodal blend of relatively high molecular weight (HMW) and low molecular weight (LMW) ethylene polymers with the HMW component being present at a weight fraction of at least 0.5 of the ethylene polymer blend. Such HMW component is preferably present at a weight fraction of 0.5 to 0.65, more preferably 0.51 to 0.60, with the remainder of the ethylene polymer being the LMW component. In addition, the HMW component has a density of at least 0.910 g/cm$^3$, preferably 0.920 to 0.935 g/cm$^3$, and more preferably 0.924 to 0.935 g/cm$^3$; a flow index or high load melt index ($I_{21}$) of no higher than 0.8, preferably from 0.15 to 0.7, and more preferably 0.2 to 0.6 g/10 min.; a flow ratio (FR, defined as the ratio of flow index [$I_{21}$] to intermediate load melt index [$I_5$], measured at 190°C under a load of 5 kilograms in accordance with ASTM D-1238, Condition P) of up to 14, preferably 8 to 14, and more preferably 9 to 13; and a dynamic elasticity no higher than 0.75 at 0.1 rad./sec. at a corresponding complex viscosity of no higher than 7x10$^5$ Pa.s (7E6 (7 x 10$^6$ poises)), at 0.1 rad./sec., preferably 0.45 to 0.7 at a corresponding complex viscosity of 2x10$^5$ to 6x10$^5$ Pa.s (2E6 to 6E6), and more preferably 0.5 to 0.65 at a corresponding complex viscosity of 3x10$^5$ to 6x10$^5$ Pa.s (3E6 to 6E6).

The LMW component has a density of at least 0.940 g/cm$^3$, preferably 0.945 to 0.970 g/cm$^3$, and most preferably 0.950 to 0.970 g/cm$^3$, and a melt index ($I_2$) of at least 100 g/10 min., preferably 200 to 2000 g/10 min., and more preferably 300 to 1500 g/10 min.

The ethylene polymer product of this invention is capable of being formed into thin gauge films, e.g., of up to 3.8x10$^{-2}$ mm (1.5 mil.), of superior mechanical properties, e.g., an Elmendorf tear resistance in the machine direction (MD Tear, ASTM D1922) of at least 390 g/mm (10 g/mil), preferably 590 to 2360 g/mm (15 to 60 g/mil), and more preferably 790 to 2360 g/mm (20 to 60 g/mil), and a Dart Drop Impact resistance ($F_{50}$, ASTM D1709) of at least 200 g, preferably 200 to 600 g, and more preferably 250 to 600 g.

The HMW and LMW ethylene polymer components may be prepared separately and physically blended in a conventional manner, e.g., by initially dry blending the resin in a mixer with suitable additives, and then melt blending it in an extruder. The relative proportions of the HMW and LMW components are such that the blending produces an ethylene polymer product having the desired properties of density, flow index ($I_{21}$), melt flow ratio (MFR), and dynamic elasticity as set out hereinbefore.

Preferably, however, the desired bimodal ethylene polymer blend is directly produced by means of a gas phase, fluidized bed, tandem reactor process. Whichever method is used, the described desirable properties of the ethylene polymer obtained are dependent on the catalyst used to polymerize both components and particularly the HMW component, as well as the process conditions.

In utilizing a gas phase, fluidized bed, tandem reactor process to obtain the product of this invention, bimodal ethylene polymer blends having the described combination of good processability and superior mechanical properties are produced by a process including the steps of polymerizing gaseous monomeric compositions comprising a major proportion of ethylene in at least two gas phase, fluidized bed reactors operating in the tandem mode under the following conditions. In the first reactor, a gas comprising monomeric composition and, optionally, a small amount of hydrogen, is contacted under polymerization conditions with an appropriate Ziegler-Natta or coordination catalyst as described more fully hereinafter, comprising a transition metal compound as primary catalyst component and a reducing agent such as an organometallic compound as cocatalyst, at a hydrogen/ethylene molar ratio of no higher than 0.3 and an ethylene partial pressure no higher than 6.9x10$^5$Pa (100 psia) such as to produce a relatively high molecular weight (HMW) polymer powder wherein the polymer is deposited on the catalyst particles. The HMW polymer powder containing the catalyst is then transferred to a second reactor with, optionally, additional cocatalyst which may be the same or different from the cocatalyst utilized in the first reactor but with no additional transition metal catalyst component, together with a gaseous mixture comprising hydrogen and monomeric composition wherein additional polymerization is carried out at a hydrogen/ethylene molar ratio of at least 0.9, the ratio being sufficiently high such that it is at least 8.0 times that in the first reactor, and an ethylene partial pressure at least 1.2 times that in the first reactor, to produce a relatively low molecular weight (LMW) polymer much of which is deposited on and within the HMW polymer/catalyst particles from the first reactor, such that the fraction of HMW polymer in the bimodal polymer leaving the second reactor is at least 0.5.

The foregoing conditions provide for a process wherein the production of fines tending to foul compressors and other equipment is kept to a relatively low level. Moreover, such conditions provide for an inhibited level of productivity in the first reactor with a resulting increased level of productivity in the second reactor to produce a bimodal polymer blend having properties as previously described and a high degree of homogeneity (indicated by low level of gels) caused by a substantial degree of blending of HMW and LMW polymer in each final polymer particle inherently resulting from the process operation. The bimodal blend is capable of being processed without undue difficulty into films having a superior combination of mechanical properties.

The gaseous monomer entering both reactors may consist wholly of ethylene or may comprise a preponderance of ethylene and a minor amount of a comonomer such as a 1-olefin containing 3 to 10 carbon atoms. Comonomeric 1-olefins which may be employed are, for example, 1-butene, 1-pentene, 1-hexene, 4-methyl-1-pentene, 1-octene, 1-decene, and mixtures thereof. The comonomer may be present in the monomeric compositions entering either or both reactors.

In many cases, the monomer composition will not be the same in both reactors. For example, the monomer entering the first reactor may contain a minor amount of comonomer such as 1-hexene so that the HMW component of the bimodal product is a copolymer, while the monomer fed to the second reactor may consist essentially of ethylene so that the LMW component of the product is substantially an ethylene homopolymer. The amount of comonomer may be, for example, from 0 to 30, preferably 0 to 20 weight percent, based on the total weight of polymer produced in the tandem process.

Hydrogen may or may not be used to modulate the molecular weight of the HMW polymer made in the first reactor. Thus, hydrogen may be fed to the first reactor such that the molar ratio of hydrogen to ethylene ($H_2/C_2$ ratio) is, for example, up to 0.3, preferably 0.005 to 0.2. In the second reactor it is necessary to produce a LMW polymer with a low enough molecular weight and in sufficient quantity so as to produce a bimodal resin which can be formed, with a minimum of processing difficulties, into films having a superior combination of mechanical properties. For this purpose, hydrogen is fed to the second reactor with the ethylene containing monomer such that the hydrogen to ethylene mole ratio in the gas phase is at least 0.9, preferably 0.9 to 5.0 and most preferably from 1.0 to 3.5. Moreover, to provide a sufficient difference between the molecular weights of the polymers in the first and second reactor so as to obtain a bimodal resin product having a wide enough molecular weight distribution necessary for the desired levels of processability and mechanical properties, the hydrogen to ethylene mole ratios in the two reactors should be such that the ratio in the second reactor is at least 8.0 times the ratio in the first reactor, for example from 8.0 to 10,000 times such ratio, and preferably 10 to 200 times the ratio in the first reactor.

Utilizing the hydrogen to ethylene ratios set out previously to obtain the desired molecular weights of the HMW and LMW polymers produced in the first and second reactors respectively tends to result in relatively high polymer productivity in the first reactor and relatively low productivity in the second reactor. This tends to result in turn in a bimodal polymer product containing too little LMW polymer to maintain satisfactory processability. A significant part of this invention lies in the discovery that this effect can be largely overcome by employing ethylene partial pressures in the two reactors so as to reduce the polymer productivity in the first reactor and raise such productivity in the second reactor. For this purpose, the ethylene partial pressure employed in the first reactor is no higher than $6.9 \times 10^5$ Pa (100 psia), for example from $1 \times 10^5$ to $6.9 \times 10^5$ Pa (15 to 100 psia), preferably from $1.4 \times 10^5$ to $5.5 \times 10^5$ Pa (20 to 80 psia) and the ethylene partial pressure in the second reactor is, for example from $1.8 \times 10^5$ to $12 \times 10^5$ Pa (26 to 170 psia), preferably $3.8 \times 10^5$ to $8.3 \times 10^5$ Pa (55 to 120 psia), with the ethylene partial pressures in any specific process being such that the ratio of ethylene partial pressure in the second to that in the first reactor is at least 1.2, preferably 1.25 to 7.0, arid more preferably 1.25 to 4.0.

If desired for any purpose, e.g., to control superficial gas velocity or to absorb heat of reaction, an inert gas such as nitrogen may also be present in one or both reactors in addition to the monomer and hydrogen. Thus the total pressure in both reactors may be, for example, from $6.9 \times 10^5$ to $41 \times 10^5$ Pa (100 to 600 psia), preferably $14 \times 10^5$ to $24 \times 10^5$ Pa (200 to 350 psia).

The temperature of polymerization in the first reactor may be, for example, from 60 to 130°C, preferably 60 to 90°C, while the temperature in the second reactor may be, for example, from 80 to 130°C, preferably 90 to 120°C. For the purpose of controlling molecular weight and productivity in both reactors, it is preferred that the temperature in the second reactor be at least 10°C higher, preferably 20 to 60°C higher than that in the first reactor.

The residence time of the catalyst in each reactor is controlled so that the productivity is suppressed in the first reactor and enhanced in the second reactor, consistent with the desired properties of the bimodal polymer product. Thus, the residence time may be, for example, 0.5 to 6 hours, preferably 1 to 3 hours in the first reactor, and, for example, 1 to 12 hours, preferably 2.5 to 5 hours in the second reactor, with the ratio of residence time in the second reactor to that in the first reactor being, for example, from 5 to 0.7, preferably 2 to 0.8.

The superficial gas velocity through both reactors is sufficiently high to disperse effectively the heat of reaction so as to prevent the temperature from rising to levels which could partially melt the polymer and shut the reactor down, and high enough to maintain the integrity of the fluidized beds. Such gas velocity may be, for example, from 40 to 120, preferably 50 to 90 cm/sec.

The productivity of the process in the first reactor in terms of grams of polymer per gram atom of transition metal in the catalyst multiplied by $10^6$, may be in the range, for example, of 1.6 to 16.0, preferably 3.2 to 9.6; in the second reactor, the productivity may be, for example, from 0.6 to 9.6, preferably 1.6 to 3.5, and in the overall process, the productivity is, for example, from 2.2 to 25.6, preferably 4.8 to 16.0. The foregoing ranges are based on analysis of residual catalyst metals in the resin product.

If it is desired to prepare the HMW and LMW components separately and subsequently physically blend them, each component may be produced in a single stage gas phase fluidized bed reactor employing process conditions within the ranges described for the two reactors utilized in the foregoing gas phase tandem reactor process. In either case, the specific process conditions are chosen in combination with an appropriate catalyst and weight fractions of the two components so as to obtain a final bimodal polymer having the desired combination of properties.

One suitable class of Ziegler-Natta catalysts for the preparation of the polymer products of this invention comprises:

(i) a catalyst precursor complex or mixture of complexes consisting essentially of magnesium, titanium, a halogen, and an electron donor as hereinafter defined supported on an inorganic porous carrier; and
(ii) at least one hydrocarbyl aluminum cocatalyst.

The titanium based complex or mixture of complexes is exemplified by an empirical formula $Mg_aTi(OR)_bX_c(ED)_d$ wherein R is an aliphatic or aromatic hydrocarbon radical having 1 to 14 carbon atoms or COR' wherein R' is an aliphatic or aromatic hydrocarbon radical having 1 to 14 carbon atoms; each OR group is alike or different; X is Cl, Br, or I, or mixtures thereof; ED is an electron donor, which is a liquid Lewis base in which the precursors of the titanium based complex are soluble; a is 0.5 to 56; b is 0, 1, or 2; c is 1 to 116, particularly 2 to 116; and d is 2 to 85. The complex is formed by reacting appropriate titanium and magnesium compounds in the presence of an electron donor.

A titanium compound which can be used to prepare the foregoing complex has the formula $Ti(OR)_aX_b$ wherein R and X are as defined for component (i) above; a is 0, 1 or 2; b is 1 to 4; and a+b is 3 or 4. Suitable compounds are $TiCl_3$, $TiCl_4$, $Ti(OC_6H_5)Cl_3$, $Ti(OCOCH_3)Cl_3$ and $Ti(OCOC_6H_5)Cl_3$.

A magnesium compound which may be reacted with the foregoing titanium compound to form the complex has the formula $MgX_2$ wherein X is as defined for component (i) above. Suitable examples are $MgCl_2$, $MgBr_2$, and $MgI_2$. Anhydrous $MgCl_2$ is a preferred compound. About 0.5 to 56, and preferably about 1 to 10, moles of the magnesium compound are used per mole of titanium compound.

The electron donor present in the catalyst composition is an organic compound, liquid at temperatures in the range of about 0°C to about 200°C. It is also known as a Lewis base. The titanium and magnesium compounds are both soluble in the electron donor.

Electron donors can be selected from the group consisting of alkyl esters of aliphatic and aromatic carboxylic acids, aliphatic ketones, aliphatic amines, aliphatic alcohols, alkyl and cycloalkyl ethers, and mixtures thereof, each electron donor having 2 to 20 carbon atoms. Among these electron donors, the preferred are alkyl and cycloalkyl ethers having 2 to 20 carbon atoms; dialkyl, diaryl, and alkyaryl ketones having 3 to 20 carbon atoms; and alkyl, alkoxy, and alkylalkoxy esters of alkyl and aryl carboxylic acids having 2 to 20 carbon atoms. The most preferred electron donor is tetrahydrofuran. Other examples of suitable electron donors are methyl formate, ethyl acetate, butyl acetate, ethyl ether, dioxane, di-n-propyl ether, dibutyl ether, ethyl formate, methyl acetate, ethyl anisate, ethylene carbonate, tetrahydropyran, and ethyl propionate.

The cocatalyst may, for example, have the formula $AlR''_eX'_fH_g$ wherein X' is Cl or OR''; R' and R'' are saturated aliphatic hydrocarbon radicals having 1 to 14 carbon atoms and are alike or different; f is 0 to 1.5; g is 0 or 1; and e + f + g = 3. Examples of suitable R, R', R'', and R'' radicals are: methyl, ethyl, propyl, isopropyl, butyl, isobutyl, tert-butyl, pentyl, neopentyl, hexyl, 2-methylpentyl, heptyl, octyl, isooctyl, 2-ethyhexyl, 5,5-dimethylhexyl, nonyl, isodecyl, undecyl, dodecyl, cyclohexyl, cycloheptyl, and cyclooctyl. Examples of suitable R and R' radicals are phenyl, phenethyl, methyloxyphenyl, benzyl, tolyl, xylyl, naphthal, and methylnaphthyl. Some examples of useful cocatalyst are triisobutylaluminum, trihexyaluminum, di-isobutylaluminum, hydride, dihexylaluminum hydride, di-isobutylhexylaluminum, trimethylaluminum, triethylaluminum, diethylaluminum chloride, $Al_2(C_2H_5)_3Cl_3$, and $Al(C_2H_5)_2(OC_2H_5)$.

Silica is the preferred support for the catalyst precursor. Other suitable inorganic oxide supports are aluminum phosphate, alumina, silica/alumina mixtures, silica pretreated with an organoaluminum compound such as triethylaluminum, and silica modified with diethylzinc, such modifier being used in a quantity sufficient to react with the hydroxyl groups on the support which otherwise tend to react with and deactivate part of the titanium in the catalyst, but not in sufficient quantity to function as a cocatalyst. A typical support is a solid, particulate material essentially inert to the polymerization. It is used as a dry powder having an average particle size of about 10 to 250 μm and preferably about 30 to about 100 μm; a surface area of at least about 3 square meters per gram and preferably at least about 50 square meters per gram; and a pore size of at least about $8 \times 10^{-9}$ m (80 Angstroms) and preferably at least about $1 \times 10^{-8}$ m (100 Angstroms). Generally, the amount of support used is that which will provide about 0.01 to about 0.5, and preferably about 0.2 to about 0.35 millimole of transition metal per gram of support. Impregnation of the abovementioned catalyst precursor into, for example, silica is accomplished by mixing the complex and silica gel in the electron donor solvent followed by solvent removal under reduced pressure and/or elevated temperature.

In preparing the polymer by the gas phase tandem reactor process, it is preferred that the titanium/magnesium precursor not be combined with the hydrocarbyl aluminum cocatalyst prior to being fed to the first reactor, but that these components be fed to such reactor separately, and that an additional quantity of the hydrocarbyl aluminum cocatalyst be fed to the second reactor in an amount sufficient to increase catalyst activity in the second reactor.

However, in such a tandem reactor process, it is not necessary to prereduce or activate the titanium/magnesium complex with an amount of cocatalyst prior to feeding the complex to the first reactor. The cocatalyst is fed to each reactor neat or as a solution in an inert solvent such as isopentane.

In preparing the HMW and IMW components separately in gas phase reactors, the titanium/magnesium complex may be partially activated with cocatalyst prior to being fed to the reactor. In this case the cocatalyst used for the partial activation may be the same or different from that fed separately to each reactor. Preferred cocatalysts for partial activation of the titanium/magnesium complex prior to its being fed to the reactor are tri-n-hexylaluminum, diethylaluminum chloride, triethylaluminum and triisobutylaluminum, or a mixture of any of these.

Broad, exemplary ranges and preferred ranges of molar ratios of various components of the foregoing catalyst systems utilizing titanium/magnesium complexes are as follows:

Table I

| Catalyst Components | Broad Exemplary Range | Preferred Range |
|---|---|---|
| 1. Mg:Ti | 0.5:1 to 56:1 | 1.5:1 to 5:1 |
| 2. Mg:X | 0.005:1 to 28:1 | 0.075:1 to 1:1 |
| 3. Ti:X | 0.01:1 to 0.5:1 | 0.05:1 to 0.2:1 |
| 4. Mg:ED | 0.005:1 to 28:1 | 0.15:1 to 1.25:1 |
| 5. Ti:ED | 0.01:1 to 0.5:1 | 0.1:1 to 0.25:1 |
| 6. Cocatalyst used as Partial Activator: Ti | 0:1 to 50:1 | 0:1 to 5:1 |
| 7. Total Cocatalyst: Ti | 0.6:1 to 250:1 | 11:1 to 105:1 |
| 8. ED:Al | 0.05:1 to 25:1 | 0.2:1 to 5:1 |

Specific examples of the described catalysts comprising a titanium/magnesium complex, and methods for their preparation are disclosed, for example, in U.S. Patent Nos. 3.989,881; 4,124,532, 4,174,429; 4,349,648; 4,379,759; 4,719,193; and 4,888,318; and European Patent application Publication Nos. 0 012 148; 0 091 135; 0 120 503; and 0 369 436.

Another class of catalysts which may be used in the process of this invention is prepared by treating a previously dried, solid, inorganic, porous carrier containing OH groups, e.g., silica, with a liquid, e.g., tetrahydrofuran, containing a hydrocarbyl magnesium, e.g. ethylmagnesium chloride, evaporating liquid from the so-treated carrier leaving a magnesium precipitate on the carrier surface, and contacting the resulting powder with a solution of transition metal compound, e.g., a tetravalent titanium compound such as titanium tetrachloride, to form a transition metal/Mg complex or mixture of complexes on the surface of the carrier. The carrier may be initially dried in the presence of an oxygen-containing gas such as air rather than an inert gas such as nitrogen. The resulting supported transition metal/Mg complex may be utilized with a hydrocarbyl aluminum cocatalyst as disclosed previously with other Ti/Mg complexes, added to the first or both reactors. If hydrocarbyl aluminum cocatalysts are added to both reactors, they may be the same or different. Various catalysts of this type and methods of preparing them are described in U.S. Patent Nos. 4,481,301 and 4,562,169.

The amount of cocatalyst utilized in the Ziegler-Natta catalyst employed in the process of making the products of this invention whether for pre-reduction or activation of the catalyst prior to polymerization or added to the sole reactor or the first reactor of a tandem reactor process or both, is generally in the range, for example, of about 2 to 100 gram atoms of cocatalyst metal, e.g., aluminum, per gram atom of transition metal, e.g., titanium, preferably about 5 to 50 gram atoms of cocatalyst metal per gram atom of transition metal. Any amount of cocatalyst added to the second reactor is not included in the foregoing ranges. However, it is preferred that additional cocatalyst be fed to the second reactor to increase catalyst activity.

Referring now to the drawing, catalyst component containing transition metal, e.g. titanium, is fed into first reactor 1 through line 2. Ethylene, comonomer, e.g., 1-hexene, if used, hydrogen, if used, inert gas such as nitrogen, if used, and cocatalyst, e.g. triethylaluminum (TEAL), are fed through line 3 into recycle line 4 where they are combined with recycle gas and fed into the bottom of reactor 1. The gas velocity is high enough and the size and density of the particles in reactor 1 are such as to form a fluidized or dense bed 5 comprising catalyst particles associated with polymer formed by the polymerization of ethylene and, if present, comonomer within reactor 1. The conditions in reactor 1, e.g. partial pressure of ethylene, hydrogen/ethylene molar ratio, temperature, total pressure, etc. are controlled such that the polymer which forms is of relatively high molecular weight (HMW). Recycle gas leaving the top of reactor 1 through line 4 is recompressed in compressor 6, cooled in heat exchanger 7 after passing through valve 8 and are fed to the bottom of reactor 1 after being optionally combined with make-up gases and cocatalyst from line 3 as described.

Periodically, when sufficient HMW polymer has formed in reactor 1, the polymer and catalyst 1 are transferred to discharge tank 9 by opening valve 10 while valves 11, 12 and 13 remain closed. When an amount of the HMW polymer and catalyst from reactor 1 which is desired to be transferred has been fed to discharge tank 9, the transfer system to second reactor 14 is activated by opening valve 13 to force the HMW polymer and catalyst into transfer hose 15. Valve 13 is then closed to isolate transfer hose 15 from discharge tank 9 and valve 11 is opened, ensuring that any gases leaking through valve 13 are vented and do not back-leak across valve 10 into reactor 1. Transfer hose 15 is then pressurized with reactor-cycle gas from reactor 14 by opening valve 16. To minimize upsets in reactor 14, surge vessel 17 is used to store gas for pressuring transfer hose 15. With valve 16 still in the open position, valve 18 is opened to convey HMW polymer and catalyst into reactor 14. Both valves 16 and 18 are left open for a period to sweep transfer hose 15. Valves 18 and 16 are then closed sequentially. Transfer hose 15 is then vented by opening valve 13, valve 11 having remained open during the transfer operation. Discharge tank 9 is then purged with purified nitrogen through line 18A by opening valve 12.

During the transfer, cycle gas comprising hydrocarbons and hydrogen leaves reactor 14 through line 19, is compressed by compressor 20, flows through valves 21, 22 and 23 in line 24 and through surge tank 17, valve 16 and pressurized transfer hose 15 as described, thus effecting the transfer of HMW polymer and catalyst to reactor 14.

After the transfer to reactor 14 is effected, the flow of gas from reactor 14 to transfer hose 15 is stopped by closing valves 21, 22, 23 and 16. Ethylene, hydrogen, comonomer, e.g., 1-hexene, if used, inert gas such as nitrogen, if used, and cocatalyst or catalyst component, e.g., TEAL, are fed to reactor 14 through line 25 after being combined with unreacted cycle gas leaving the top of reactor 14 line 19 which is compressed in compressor 20, cooled in heat exchanger 26 and enters the bottom of reactor 14 through line 27. The gas velocity and size and density of the particles in reactor 14 are such as to form fluidized or dense bed 28 of bimodal polymer particles associated with the catalyst, including the transition metal primary catalyst component added to reactor 1. The conditions in reactor 14, e.g., partial pressure of ethylene, hydrogen/ethylene ratio and temperature, are controlled such that a relatively low molecular weight (LMW) polymer forms primarily on and within the HMW polymer/catalyst particles transferred from reactor 1. After a sufficient amount of LMW polymer has formed resulting in a bimodal polymer having a desirable molecular weight distribution and other properties, the polymer is transferred to discharge tank 29 by opening valve 30 while keeping valve 31 closed. After substantially all the polymer has been transferred to discharge tank 29, it is collected by closing valve 30 and opening valve 31, resulting in the pressure discharge of the final polymer product through line 32.

The following Examples illustrate the invention. The elasticity and viscosity values were all determined at 0.1 rad./sec.

Example 1

A catalyst was prepared by reacting $MgCl_2$, tetrahydrofuran (THF) and $TiCl_3.0.33\ AlCl_3$, adding the resulting complex to dehydrated silica treated with sufficient triethylaluminum to react with the OH groups in the silica but not enough to function significantly as partial activator or cocatalyst, and drying the resulting silica supported catalyst precursor. The procedure used to prepare the catalyst was substantially that of Example 4 of U.S. Patent No. 4,888,318 except that the partial activation of the supported magnesium and titanium precursor with tri-n-hexyaluminum and diethylaluminum chloride, as shown in the patent, was omitted. The free flowing catalyst powder contained the following weight percentages of components: Ti, 1.13; Mg, 1.95; Cl, 8.22; THF, 15.4; and Al, 1.41.

Using the foregoing catalyst, a gas phase, fluidized bed polymerization process was carried out using two reactors operating in the tandem mode as shown in the drawing. The process included the feeding of 1-hexene as comonomer and triethylaluminum (TEAL) as cocatalyst to both reactors. Nitrogen was used to control the total pressure in both reactors at about 300 psig. Averages of other conditions in both reactors, which were controlled to produce a HMW-HDPE bimodal resin suitable for being blown extruded into low gauge films with superior mechanical properties, are shown in Table I, wherein "$PC_2=$" is the partial pressure of the ethylene, "$H_2/C_2$" is the molar ratio of hydrogen to ethylene, and "$C_6/C_2$" is the molar ratio of 1-hexene to ethylene in the gas phase.

Table I

|  | Reactor 1 (HMW) | Reactor 14 (LMW) |
|---|---|---|
| Temp. (°C) | 75 | 105 |
| $PC_2 = Pa$ (psi) | $3.8 \times 10^5$ to $4.5 \times 10^5$ (55-65) | $5.8 \times 10^5$ to $6.2 \times 10^5$ (84-90) |
| $H_2/C_2$ | 0.03 | 2.0 |
| $C_6/C_2$ | 0.035-0.045 | 0.03 |
| TEAL (ppmw) | 290 | 190 |
| Resid. Time (hrs) | 2.8 | 3.6 |

The HMW polymer leaving reactor 1 was found by direct measurement to have a flow index ($I_{21}$) of 0.35 g/10 min., a flow ratio (FR) of 11, a dynamic elasticity of 0.56 at a complex viscosity of $4.1x10^5$ Pa.s (4.1E6 (4.1 x $10^6$ poises)), and a density of 0.931 g/cm$^3$, while the LMW polymer produced in reactor 14 was calculated from a single reactor process model to have a melt index ($I_2$) of about 400 g/10 min. and a density of 0.966 g/cm$^3$.

The granular bimodal polymer obtained from reactor 14 had a fraction of HMW component of 0.57. In this example and in Examples 2, and 4 to 7, the final polymer contained about 4 to 7 ppm of titanium ash. This is an indication of the amount of titanium precursor used in the process since substantially all the titanium in such precursor is present in the final polymer.

Using standard procedures and a Banbury mixer and Sterling extruder, the granular bimodal polymer from reactor 14 was compounded into pellets having a flow index ($I_{21}$) of 6.1 g/10 min., a MFR of 116, a density of 0.946 g/cm$^3$, and a dynamic elasticity of 0.598 at a corresponding complex viscosity of $1.1x10^5$ Pa.s (1.1E6 poises). The rheological properties, i.e., of elasticity and viscosity, of the HMW component and the bimodal polymer blend were measured in the Rheometric System IV at 200°C under dynamic oscillatory mode in parallel plate geometry.

The bimodal polymer pellets were blown extruded into films on a 50 mm Alpine extruder equipped with a grooved barrel extruder, a 100 mm die and 1 mm die gap. The other extruder conditions were: melt temp = 213°(416°F); frost line height = 91cm (36 inches); blow-up ratio = 4.0; nominal film gauge = $1.3x10^{-2}$ mm (0.5 mil); output = 54.4 kg/h (120 lbs./h). The films were found to have a Dart Drop Impact ($F_{50}$) of 400 g and a MD Tear of 1020 g/mm (26 g/mil). Contrary to what is expected in the art, these properties were achieved despite the fact that the bimodal polymer was found to have a higher degree of short chain branching in the LMW component than in the HMW component.

Example 2

The procedure of Example 1 was followed using slightly different process conditions as shown in Table II:

Table II

|  | Reactor 1 (HMW) | Reactor 14 (LMW) |
|---|---|---|
| Temp. (°C) | 75 | 105 |
| $PC_2$ = Pa (psi) | $4.7x10^5$ (68) | $5.9x10^5$ (86) |
| $H_2/C_2$ | 0.03 | 1.7 |
| $C_6/C_2$ | 0.04 | 0.04 |
| TEAL (ppmw) | 300 | 300 |
| Resid. Time (hrs) | 3.0 | 4.0 |

The HMW component leaving reactor 1 was found by direct measurement to have the following properties: $I_{21}$ = 0.45 g/10 min.; FR = 10; dynamic elasticity = 0.59 at a complex viscosity of $4x10^5$ Pa.s (4.0E6 poise); and density = 0.931 g/cm$^3$; the LMW was calculated to have a melt index ($I_2$) of 450 (estimated from GPC) and a density of 0.964 g/cm$^3$; and the pellets prepared from the granular bimodal blend polymer from reactor 14 had the following properties: HMW weight fraction = 0.57; $I_{21}$ = 6.7 g/10 min.; MFR = 106; dynamic elasticity = 0.60 at a complex viscosity of $9.3x10^4$ Pa.s (9.3E5 poises); and density = 0.945 g/cm$^3$. Films prepared from the bimodal polymer blend as described in Example 1 had a Dart Drop Impact ($F_{50}$) of 406 g and an MD Tear of 1100 g/mm (28 g/mil).

Example 3

HMW and LMW components intended to be physically blended in producing an HMW-HDPE bimodal polymer in accordance with this invention were separately prepared in a single stage gas phase reactor. The catalyst used to prepare the HMW component was the same as that described in Example 1. The catalyst used to prepare the LMW component was the catalyst of Example 1 subjected to prereduction or partial activation with tri-n-hexylalminum, as cocatalyst. The procedure used to prepare the catalyst was substantially that of Example 4 of U.S. patent No. 4,888,318 except that the partial activation of the supported magnesimn and titanimn precursor was carried out with tri-n-hexylaluminum alone as partial activator rather than the latter together with diethylaluminum chloride as shown in the patent. The free flowing catalyst powder contained the following weight percentages of components: Ti, 1.07; Mg, 1.7; Cl, 7.5; THF, 14.3; and Al, 1.98.

Reactor conditions employed in the preparation of the two components are shown in Table III.

Table III

| | HMW | LMW |
|---|---|---|
| Temp. (°C) | 80 | 98 |
| $PC_2$ = Pa (psi) | $5.8 \times 10^5$ (84) | $5.4 \times 10^5$ (78) |
| $H_2/C_2$ | 0.02 | 1.72 |
| $C_6/C_2$ | 0.008 | 0.085 |
| TEAL (ppmw) | 400 | 400 |
| Resid. Time (hrs) | 2.0 | 2.0 |

The HMW component had the following properties: $I_{21}$ = 0.3 g/10 min.; FR = 10; dynamic elasticity = 0.64 at a complex viscosity of $5 \times 10^5$ Pa.s (5.0E6 poises); and density = 0.935 $g/cm^3$; while the LMW component had a melt index ($I_2$) of 300 g/10 min. and a density of 0.950 $g/cm^3$.

A blend of the HMW and LMW components was prepared by melt mixing in a Banbury mixer with a conventional stabilizer package to prevent degradation. The blend had the following properties: HMW weight fraction = 0.55; $I_{21}$ = 5.8 g/10 min.; MFR = 90; density = 0.942 $g/cm^3$; and dynamic elasticity = 0.577 at a complex viscosity of $11.4 \times 10^4$ Pa.s (11.4E5 poises). A film prepared from the blend as described in Example 1 had a Dart Drop Impact ($F_{50}$) of 330 g and a MD Tear of 830 g/mm (21 g/mil).

### Example 4

The procedure of Example 3 was followed except that the blend contained a weight fraction of 0.50 of the HMW fraction prepared in a (3/4 inch) Brabender twin screw extruder. The blend of HMW and LMW components had the following properties: $I_{21}$ = 7.7 g/10 min.; MFR = 101; density = 0.9624 $g/cm^3$; and dynamic elasticity = 0.516 at a complex viscosity of $9.3 \times 10^4$ Pa.s (9.3E5 poises). The bimodal polymer blend could be formed into low gauge films as described in Example 1 having excellent mechanical properties, e.g., Dart Drop Impact and MD Tear.

### Example 5

The procedure of Example 4 was generally followed except that the catalyst of sample 1, which was not partially activated, was used to prepare both the HMW and LMW polymers, and the conditions in the HMW and LMW reactors were as shown in Table IV.

Table IV

| | HMW | LMW |
|---|---|---|
| Temp. (°C) | 74 | 105 |
| $PC_2$ = Pa (psi) | $1.7 \times 10^5$ (24) | $6 \times 10^5$ (87) |
| $H_2/C_2$ | 0.018 | 1.44 |
| $C_6/C_2$ | 0.098 | 0.0002 |
| TEAL (ppmw) | 320 | 400 |
| Resid. Time (hrs) | 2.8 | 2.4 |

The HMW component had the following properties: $I_{21}$ = 0.38 g/10 min.; FR = 11; dynamic elasticity = 0.615 at a complex viscosity of $4.16 \times 10^5$ Pa.s (4.16E6 poises); and density = 0.926 $g/cm^3$; while the LMW component had a melt index ($I_2$) of 250 g/10 min. and a density of 0.960 $g/cm^3$.

A blend of the HMW and LMW components prepared as described in Example 4 had the following properties: HMW weight fraction = 0.52; $I_{21}$ = 9.9 g/10 min.; MFR = 115; density = 0.942 $g/cm^3$ and dynamic elasticity = 0.517 g/10 min. at a complex viscosity of $8 \times 10^4$ Pa (8.0E5 poises). A 1 mil film prepared from the blend as described in Example 1 had a Dart Drop Impact ($F_{50}$) of 387 g, a MD Tear of 1020 g/mm (26 g/mil)., and a TD Tear (Elmendorf tear resistance in the transverse direction) of 2240 g/mm (57 g/mil).

### Example 6

The procedure of Example 5 was followed using the same HMW and LMW components except that such components were blended in a different proportion. The blend had the following properties: HMW weight fraction =

0.58; $I_{21}$ = 5.7 g/10 min.; MFR = 94; density = 0.940 g/cm$^3$; and dynamic elasticity = 0.522 at a complex viscosity of 10.2 x 10$^4$ Pa.s (10.2E5 poises). A 2.5x10$^{-2}$ mm (1 mil) film prepared from the blend as described in Example 1 had a Dart Drop Impact ($F_{50}$) of 305 g, a MD Tear of 906 g/mm (23 g/mil.) and a TD Tear of 14800 g/mm (375 g/mil).

The results of the foregoing examples indicate that HMW-HDPE resins of this invention can be blown extruded into low gauge films having superior mechanical properties.

Before being formulated into films, the polymers of this invention may be compounded with various additives utilized in relatively minor amounts, e.g., other polymers such as conventional low-density polyethylene (LDPE) and recycled polyethylene, stabilizers, anti-oxidants, plasticizers, fillers, etc., as are well known in the art.

## Claims

1. A polymer blend which consists essentially of:

   i) at least 0.5 weight fraction of the polymer blend of a high molecular weight (HMW) component having a density of at least 0.910 g/cm$^3$, a flow index ($I_{21}$ at 190°C ASTM D-1238 condition F) no higher than 0.8 g/10 min., a molecular weight distribution indicated by a flow ratio (FR defined as the ratio of flow index $I_{21}$ to intermediate load melt index $I_5$, measured at 190°C under a load of 5 kilograms in accordance with ASTM D-1238, Condition P) of up to 14, and a dynamic elasticity at 0.1 rad./sec., of no higher than 0.75 at a corresponding complex viscosity at 0.1 rad./sec. of no higher than 7x10$^5$ Pa.s (7x10$^6$ poise); and
   ii) a low molecular weight (LMW) component having a density of at least 0.940 g/cc and a melt index ($I_2$ at 190°C ASTM D-1238, Condition E) of at least 100 g/10 min

   wherein the HMW component and the LMW component, which may be the same or different, consist of a homopolymer of ethylene or at least one copolymer of a preponderance of ethylene with a minor amount of a comonomeric $C_3$ to $C_{10}$ 1-olefin

2. A polymer blend according to claim 1 wherein the HMW component is present at a weight fraction from 0.5 to 0.65, and has a density from 0.920 to 0.935 g/cm$^3$, an $I_{21}$ from 0.15 to 0.7 g/10 min., a FR of from 8 to 14 and a dynamic elasticity from 0.45 to 0.7 at a corresponding complex viscosity from 2x10$^5$ to 6x10$^5$ Pa.s (2x10$^6$ to 6x10$^6$ poises), and the LMW component has a density from 0.945 to 0.970 g/cm$^3$ and an $I_2$ from 200 to 2000 g/10 min.

3. A polymer blend according to claim 2 wherein the HMW component is present at a weight fraction from 0.51 to 0.60, and has a density from 0.924 to 0.935 g/cm$^3$, an $I_{21}$ from 0.2 to 0.6 g/10 min., a FR from 9 to 13, and a dynamic elasticity from 0.5 to 0.65 at a corresponding complex viscosity from 3x10$^5$ to 6x10$^5$ Pa (3x10$^6$ to 6x10$^6$ poises), and the LMW component has a density from 0.950 to 0.970 g/cm$^3$ and an $I_2$ from 300 to 1500 g/10 min.

4. A polymer blend according to any preceding claim which has a density from 0.940 to 0.960 g/cm$^3$, an $I_{21}$ from 4 to 12 g/10 min., a MFR ($I_{21}/I_2$) from 75 to 180, and a dynamic elasticity from 0.45 to 0.65 at a corresponding complex viscosity from 6x10$^4$ to 14x10$^4$ Pa·s (6x10$^5$ to 14x10$^5$ poises), and is formable into a film exhibiting a Dart Drop Impact resistance ($F_{50}$, ASTM D1709) of 250 to 600 grams.

5. A polymer blend according to claim 1 wherein the amount of comonomer is from 0 to 30 weight percent, based on the total weight of polymer.

6. A polymer blend according to claim 1 or 2 which comprises a copolymer wherein the comonomer is 1-hexene.

7. A polymer blend according to any preceding claim which has a density from 0.943 to 0.952 g/cm$^3$, an $I_{21}$ from 5 to 10 g/10 min., a MFR from 80 to 150, and a dynamic elasticity from 0.45 to 0.60 at a corresponding complex viscosity from 7x10$^4$ to 14x10$^4$ Pa.s (7x10$^5$ to 14x10$^5$ poises).

8. A film obtained from a polymer blend according to any preceding claim.

9. A film according to claim 8 which is a blown film.

10. A film according to claim 8 or 9 having a Dart Drop Impact ($F_{50}$) of 200 to 600 g and a MD Tear (ASTM D1922) of 590 to 2360 g/mm (15 to 60 g/mil).

**Patentansprüche**

1. Eine Polymermischung, welche im Wesentlichen besteht aus:

   i) mindestens 0,5 Gewichtsanteilen der Polymermischung aus einem hochmolekulargewichtigen (HMG) Bestandteil, welcher eine Dichte von mindestens 0,910 g/cm$^3$, einen Fließindex (I$_{21}$ bei 190°C ASTM D-1238 Kondition F) nicht höher als 0,8g/10 min., eine Molekulargewichtsverteilung, angegeben durch ein Fließverhältniss (FV), definiert als das Verhältnis des Fließexponenten I$_{21}$ zum intermediären Beladungsschmelzindex I$_5$, gemessen bei 190°C bei einer Beladung von 5 Kilogramm in Übereinstimmung mit ASTM D-1238, Kondition P, von bis zu 14 und eine dynamische Elastizität von 0,1 rad./sec., nicht höher als 0,75 bei einer entsprechenden komplexen Viskosität von 0,1 rad./sec., nicht höher als 7 x 10$^5$ Pa.s (7x10$^6$ Poise) aufweist; und
   ii) einem niedermolekulargewichtigen (NMG) Bestandteil, welcher eine Dichte von mindestens 0,940 g/cc und einen Schmelzindex (I$_2$ bei 190°C ASTM D-1238, Kondition E) von mindestens 100g/10 min aufweist,

   wobei der HMG und der NMG Bestandteil, die gleich oder unterschiedlich sein dürfen, aus einem Homopolymer von Ethylen, oder mindestens einem Copolymer mit überwiegend Ethylen, mit einer geringen Menge von comonomerischen C$_3$ bis C$_{10}$ 1-Olefin bestehen.

2. Eine Polymermischung gemäß Anspruch 1, worin der HMG Bestandteil einen Gewichtsanteil von 0,5 bis 0,65 aufweist, und eine Dichte von 0,920 bis 0,935 g/cm$^3$, einen I$_{21}$ von 0,15 bis 0,7 g/10 min., ein FV von 8 bis 14, und eine dynamische Elastizität von 0,45 bis 0,7, bei einer entsprechenden komplexen Viskosität von 2x10$^5$ bis 6x10$^5$ Pa.S (2x10$^6$ bis 6x10$^6$ Poise) hat, und der NMG Bestandteil eine Dichte von 0,945 bis 0,970 g/cm$^3$ und einen I$_2$ von 200 bis 2000 g/10 min. hat.

3. Eine Polymermischung gemäß Anspruch 2, worin der HMG Bestandteil einen Gewichtsanteil von 0,51 bis 0,60 aufweist und eine Dichte von 0,924 bis 0,935 g/cm$^3$, einen I$_{21}$ von 0,2 bis 0,6 g/10 min., ein FV von 9 bis 13 und eine dynamische Elastizität von 0,5 bis 0,65 bei einer entsprechenden komplexen Viskosität von 3x10$^5$ bis 6x10$^5$ Pa (3x10$^6$ bis 6x10$^6$ Poise) hat, und der NMG Bestandteil eine Dichte von 0,950 bis 0,970 g/cm$^3$ und einen I$_2$ von 300 bis 1500 g/10 min. hat.

4. Eine Polymermischung gemäß jedem vorangehendem Anspruch, welche eine Dichte von 0,940 bis 0,960 g/cm$^3$, einen I$_{21}$ von 4 bis 12 9/10 min., einen MFV (I$_{21}$/I$_2$) von 75 bis 180, und eine dynamische Elastizität von 0,45 bis 0,65, bei einer entsprechenden komplexen Viskosität von 6x10$^4$ bis 14x10$^4$ Pa.S (6x10$^5$ bis 14x10$^5$ Poise), hat, und in einen Film formbar ist, der eine Dart Drop Schlagzähigkeit (F$_{50}$, ASTM D1709) von 250 bis 600 Gramm aufweist.

5. Eine Polymermischung gemäß Anspruch 1, worin die Menge an Comonomer von 0 bis 30 Gewichtsprozent liegt, basierend auf dem Gesamtgewicht an Polymer.

6. Eine Polymermischung gemäß Anspruch 1 oder 2, welche ein Copolymer enthält, bei dem das Comonomer 1-Hexen ist.

7. Eine Polymermischung gemäß jedem vorangehenden Anspruch, welche eine Dichte von 0,943 bis 0,952 g/cm$^3$, einen I$_{21}$ von 5 bis 10 g/10 min., einen MFV von 80 bis 150, und eine dynamische Elastizität von 0,45 bis 0,60, bei einer entsprechenden komplexen Viskosität von 7x10$^4$ bis 14x10$^4$ Pa.S (7x10$^5$ bis 14x10$^5$ Poise), hat.

8. Einen Film, der aus einer Polymermischung gemäß jedem vorangehendem Anspruch, erhalten wurde.

9. Einen Film gemäß Anspruch 8, der ein Blasfilm ist.

10. Einen Film gemäß Anspruch 8 oder 9, der einen Dart Drop Impact (F$_{50}$) von 200 bis 600 g, und einen MD Tear (ASTM D1922) von 590 bis 2360 g/mm (15 bis 60 g/mil) hat.

**Revendications**

1. Un mélange de polymère qui consiste essentiellement en :

i) une fraction d'au moins 0,5 % en poids du mélange de polymère d'un composant de masse moléculaire élevée (HMW) ayant une densité d'au moins 0,910 g/cm$^3$, un indice de fluidité ($I_{21}$), à 190°C selon ASTM D-1238 Condition F, non supérieur à 0,8 g/10 min., une distribution de masse moléculaire indiquée par un rapport des indices de fluidité (FR) défini comme étant le rapport de l'indice de fluidité $I_{21}$ à l'indice de fluidité $I_5$, sur charge intermédiaire, mesuré à 190 °C sous une charge de 5 kg selon ASTM D-1238, Condition P, pouvant atteindre 14, et une élasticité dynamique à 0,1 rad./s. non supérieure à 0,75 à une viscosité complexe correspondant à 0,1 rad./s., non supérieure à 7x10$^5$ Pa.s (7x10$^6$ poises) ; et

ii) un composant de masse moléculaire faible (LMW) ayant une densité d'au moins 0,940g/cm$^3$ et un indice de fluidité ($I_2$) à 190°C selon ASTM D-1238 Condition E, d'au moins 100g/10 min.

dans lequel le constituant de HMW et le constituant de LMW qui peuvent être identiques ou différents, consistent en un homopolymère d'éthylène ou au moins un copolymère d'une majorité d'éthylène avec une quantité mineure d'oléfine 1 en C$_3$-C$_{10}$ comonomère.

2. Un mélange de polymère selon la revendication 1, dans lequel le composant de HMW est présent selon une fraction pondérale de 0,5 à 0,65, et présente une densité de 0,920 à 0,935 g/cm$^3$, un $I_{21}$ de 0,15 à 0,7 g/10 min., un FR de 8 à 14 et une élasticité dynamique de 0,45 à 0,7 à une viscosité complexe correspondante de 2x10$^5$ à 6x10$^5$ Pa.s (2x10$^6$ à 6x10$^6$ poises) et le composant de LMW présente une densité de 0,945 à 0,970 g/cm$^3$ et un $I_2$ de 200 à 2000 g/10 min.

3. Un mélange de polymère selon la revendication 2, dans lequel lé composant de HMW est présent selon une fraction pondérale de 0,51 à 0,60, et présente une densité de 0,924 à 0,935 g/cm$^3$, un $I_{21}$ de 0,2 à 0,6 g/10 min., un FR de 9 à 13 et une élasticité dynamique de 0,5 à 0,65 à une viscosité complexe correspondante de 3x10$^5$ à 6x10$^5$ Pa.s (2x10$^6$ à 6x10$^6$ poises), et le composant de LMW présente une densité de 0,950 à 0,970 g/cm$^3$ et un $I_2$ de 300 à 1500 g/10 min.

4. Un mélange de polymère selon l'une quelconque des revendications précédentes qui présente une densité de 0,940 à 0,960 g/cm$^3$, un $I_{21}$ de 4 à 12 g/10 min., un MFR ($I_{21}/I_2$) de 75 à 180. et une élasticité dynamique de 0,45 à 0,65 à une viscosité complexe correspondante de 6x10$^4$ à 14x10$^4$ Pa.s (6x10$^5$ à 14x10$^5$ poises), et est susceptible d'être mise en forme en un film présentant une résistance à la flèche (F$_{50}$, selon ASTM D-1709) de 250 à 600 g.

5. Un mélange de polymère selon la revendication 1, dans lequel la quantité de comonomère est comprise entre 0 et 30 % en poids, exprimée sur le poids total du polymère.

6. Un mélange de polymère selon l'une quelconque des revendications 1 ou 2, qui comprend un copolymère dans lequel le comonomère est le 1-hexène.

7. Un mélange de polymère selon l'une quelconque des revendications précédentes, qui présente une densité de 0,943 à 0,952 g/cm$^3$, un $I_{21}$ de 5 à 10g/10 min., un MFR de 80 à 150, et une élasticité dynamique de 0,45 à 0,60 à une viscosité complexe correspondante de 7x10$^4$ à 14x10$^4$ Pa.s (7x10$^5$ à 14x10$^5$ poises).

8. Un film obtenu à partir d'un mélange de polymère selon l'une quelconque des revendications précédentes.

9. Un film selon la revendication 8 qui est un film soufflé.

10. Un film selon la revendication 8 ou 9, présentant une résistance à la flèche (F$_{50}$) de 200 à 600 g et une résistance à la déchirure dans le sens machine (selon ASTM D-1922) de 590 à 2360 g/mm (15 à 60 g/mil).